# EUROPÄISCHE PATENTSCHRIFT

(11) **EP 3 721 548 B1**
(45) Veröffentlichungstag und Bekanntmachung des Hinweises auf die Patenterteilung: **02.08.2023**
(21) Anmeldenummer: 18815650.9
(22) Anmeldetag: 06.12.2018
(51) Int. Cl.: H02S 40/32, H02J 3/38, H02J 7/35

(54) **PHOTOVOLTAIKANLAGE UND WECHSELRICHTER MIT EINER KOMMUNIKATIONSSCHNITTSTELLE**
PHOTOVOLTAIC SYSTEM AND INVERTER HAVING A COMMUNICATION INTERFACE
SYSTÈME PHOTOVOLTAÏQUE ET ONDULEUR DOTÉ D'UNE INTERFACE DE COMMUNICATION

(30) Priorität: 06.12.2017 DE 102017129082
(43) Veröffentlichungstag der Anmeldung: 14.10.2020
(73) Patentinhaber: SMA Solar Technology AG, 34266 Niestetal (DE)
(72) Erfinder: BUCHHOLD, Stefan, 34253 Lohfelden (DE); FRIEBE, Jens, 34246 Vellmar (DE); KOTTHAUS, Michael, 34266 Niestetal (DE); MOESER, Ephraim, 34233 Fuldatal (DE); SOEDERBERG, Torsten, 34320 Soehrewald (DE); WAPPLER, Thomas, 34302 Guxhagen (DE)
(86) Internationale Anmeldenummer: PCT/EP2018/083758
(87) Internationale Veröffentlichungsnummer: WO 2019/110717

(56) Entgegenhaltungen:
- WO-A1-2014/184259
- WO-A2-2010/091444
- DE-A1-102011 054 971
- US-A1- 2016 056 759

## Beschreibung

### TECHNISCHES GEBIET DER ERFINDUNG

Die Erfindung betrifft eine Photovoltaikanlage, die einen Photovoltaikgenerator, einen Wechselrichter und Kommunikationsschnittstelle zum Anschluss einer externen elektrischen Einheit, insbesondere einen Energiespeicher umfasst. Weiterhin betrifft die Erfindung einen Wechselrichter für eine Photovoltaikanlage sowie ein Verfahren zum Betrieb einer Photovoltaikanlage.

### STAND DER TECHNIK

Eine Photovoltaikanlage kann elektrische Leistung erzeugen und in ein Wechselspannungsnetz einspeisen. Dazu umfasst eine herkömmliche Photovoltaikanlage einen Wechselrichter, der dazu eingerichtet ist, einen Gleichstrom in einen Wechselstrom umzuwandeln. Der Gleichstrom kann dabei von einem Gleichstromgenerator, insbesondere von einem Photovoltaikgenerator erzeugt werden, der gleichstromseitig an den Wechselrichter angeschlossen ist. Das Wechselspannungsnetz kann als öffentliches Energieversorgungsnetz, als lokales Netz eines Betriebes oder Haushaltes oder als Inselnetz ohne Anschluss an ein öffentliches Energieversorgungsnetz ausgebildet und wechselstromseitig an den Wechselrichter angeschlossen sein.

Herkömmliche Wechselrichter für Photovoltaikanlagen besitzen keine eigene Energieversorgung, sondern beziehen eine für ihren Betrieb benötigte Betriebsleistung aus einem angeschlossenen Photovoltaikgenerator und/oder aus einem angeschlossenen Wechselspannungsnetz. Dazu umfassen diese Wechselrichter in der Regel ein Netzteil, einen Gleichrichter und/oder einen Gleichspannungswandler, um eine gleichspannungs- oder wechselspannungsseitig anliegende Gleich- bzw. Wechselspannung in eine für den Betrieb der elektrischen und elektronischen Bauteile des Wechselrichters geeignete elektrische Leistung umzuwandeln.

Aus der DE202006020751U1 ist ein Wechselrichter bekannt, der eine Kommunikationsschnittstelle umfasst, an die eine externe elektrische Einheit angeschlossen werden kann, wobei die externe elektrische Einheit einen Datenspeicher und einen elektrischer Speicher, insbesondere einen Akkumulator umfassen kann. Der Wechselrichter kann bei angeschlossener externer elektrischer Einheit von dem elektrischen Speicher über die Kommunikationsschnittstelle mit elektrischer Leistung versorgt werden, so dass der Wechselrichter auch ohne sonstige gleichspannungs- oder wechselspannungsseitige Versorgung zumindest insoweit betrieben werden kann, dass Daten aus dem Datenspeicher in den Wechselrichter übertragen werden können. Diese Datenübertragung kann insbesondere zur Durchführung von Software-Updates in dem Wechselrichter verwendet werden.

Die US 2016/056759 A1 offenbart ein Photovoltaik-Modul mit einem Wechselrichter, einer Kommunikationseinheit und einer elektrischen Speichereinheit, bei dem mittels einer Steuerung die Energie des Photovoltaik-Moduls in ein elektrisches Verteilnetz und/oder die elektrische Speichereinheit eingespeist wird. Die Kommunikationsschnittstelle kann dabei kommunikativ direkt mit dem Wechselrichter und der Speichereinheit verbunden sein, um mit diesen Steuerbefehle auszutauschen.

Aus der WO 2010/091444 A2 ist eine Photovoltaikanlage bekannt, bei der ein Wechselrichter eine USB-Schnittstelle zum Anschluss eines USB-Massenspeichergeräts aufweist, wobei eine Steuerung des Wechselrichters mittels der Daten aus dem USB-Massenspeichergerät aktualisiert und/oder konfiguriert werden kann.

Dem Fachmann sind Kommunikationsschnittstellen bekannt, die Anschlüsse nach dem sogenannten USB-Standard (USB = Universal Serial Bus) umfassen. Derartige Kommunikationsschnittstellen sind dazu eingerichtet, sowohl Daten zwischen den über ein USB-Kabel verbundenen Geräten auszutauschen als auch elektrische Leistung über das USB-Kabel von einem der Geräte an ein anderes der Geräte zu übertragen.

### AUFGABE DER ERFINDUNG

Der Erfindung liegt die Aufgabe zugrunde, eine Photovoltaikanlage bereitzustellen, die ohne Zuführung elektrischer Leistung aus gleichspannungs- oder wechselspannungsseitig an einen Wechselrichter der Photovoltaikanlage angeschlossenen Quellen zumindest derart betrieben werden kann, dass eine Kommunikation mit Komponenten der Photovoltaikanlage, insbesondere mit deren Wechselrichtern ermöglicht wird.

### LÖSUNG

Die Aufgabe wird durch eine Photovoltaikanlage mit den Merkmalen des Patentanspruchs 1, einem Wechselrichter mit den Merkmalen des Patentanspruchs 7 sowie ein Verfahren mit den Merkmalen des Patentanspruchs 10 gelöst. Bevorzugte Ausführungsformen sind in den jeweils abhängigen Patentansprüchen definiert.

### BESCHREIBUNG DER ERFINDUNG

Eine Photovoltaikanlage umfasst einen Photovoltaikgenerator, einen Wechselrichter und eine zum Anschluss einer externen elektrischen Einheit eingerichtete Kommunikationsschnittstelle. Eine erfindungsgemäße Photovoltaikanlage ist dadurch gekennzeichnet, dass die Kommunikationsschnittstelle zum bidirektionalen Leistungsaustausch mit der externen elektrischen Einheit eingerichtet ist. Dadurch kann die Photovoltaikanlage über die Kommunikationsschnittstelle sowohl mit der externen elektrischen Einheit kommunizieren als auch Energie in die externe elektrische Einheit einspeisen und aus der externen elektrischen Einheit beziehen. Eine separate Schnittstelle zum Bezug oder zur Zwischenspeicherung von elektrischer Energie kann damit entfallen.

Die Kommunikationsschnittstelle kann insbesondere einen USB-Anschluss umfassen. Der Universal Serial Bus, kurz USB, ist eine standardisierte Technologie, die weltweit millionenfach verwendet wird, wobei viele Geräte USB-Anschlüsse aufweisen, über die bereits grundsätzlich elektrische Leistung transferiert werden kann. Solche Geräte mit USB-Anschlüssen eignen sich insbesondere dann als externe elektrische Einheit für eine erfindungsgemäße Photovoltaikanlage, wenn sie elektrische Leistung sowohl aufnehmen als auch abgeben können.

Die Kommunikationsschnittstelle kann bevorzugt in dem Wechselrichter oder in einer Netzanschlusseinheit der Photovoltaikanlage angeordnet sein. Diese Komponenten beinhalten in der Regel bereits elektrische und elektronische Bauteile und befinden sich im Leistungspfad der elektrischen Leistung, die von den Photovoltaikgeneratoren erzeugt und von dem Wechselrichter ggf. über die Netzanschlusseinheit in ein Wechselspannungsnetz eingespeist wird, wobei insbesondere der Wechselrichter der Photovoltaikanlage Einfluss auf den Leistungsfluss entlang dieses Leistungspfades nehmen kann. Zudem sind Datenverarbeitungs- und Kommunikationsmittel insbesondere im Wechselrichter angeordnet, beispielsweise Prozessoren zur Steuerung des Betriebs des Wechselrichters und damit auch des Verhaltens der Photovoltaikanlage insgesamt.

In einer Ausführungsform ist die Kommunikationsschnittstelle dazu eingerichtet, aus der angeschlossenen externen elektrischen Einheit eine elektrische Leistung zu entnehmen, um Komponenten der Photovoltaikanlage mit dieser elektrischen Leistung zu versorgen. Damit kann ein Wechselrichter direkt aus einer daran angeschlossenen externen elektrischen Einheit mit einer elektrischen Leistung versorgt werden, die für einen Betrieb des Wechselrichters benötigt wird. Alternativ oder zusätzlich können mehrere Wechselrichter einer Photovoltaikanlage, die über eine gemeinsame Netzanschlusseinheit mit dem Wechselspannungsnetz verbunden sind, zentral von einer an die Netzanschlusseinheit angeschlossenen externen elektrischen Einheit mit elektrischer Leistung für ihren Betrieb versorgt werden. Dabei kann es genügen, dem jeweiligen Wechselrichter so viel elektrische Leistung zur Verfügung zu stellen, dass eine Kommunikation mit dem Wechselrichter ermöglicht wird. Dies ist insbesondere dann vorteilhaft, wenn an den gleichspannungs- oder wechselspannungsseitigen Anschlüssen des Wechselrichters keine elektrische Leistung zur Verfügung steht, beispielsweise nachts, wenn die gleichspannungsseitig am Wechselrichter angeschlossenen Photovoltaikgeneratoren keine Leistung liefern, oder wenn das wechselspannungsseitig an den Wechselrichter angeschlossene Wechselspanungsnetz ausgefallen oder von der Photovoltaikanlage abgetrennt ist, oder wenn die Photovoltaikanlage nach einem Fehler abgeschaltet wurde.

Bevorzugt kann die externe elektrische Einheit einen Energiespeicher, insbesondere eine wiederaufladbare Batterie umfassen, wobei die Kommunikationsschnittstelle dazu eingerichtet ist, eine elektrische Leistung in den Energiespeicher einzuspeisen. Dadurch kann gewährleistet werden, dass der Energiespeicher eine elektrische Ladung beinhaltet, die über die Kommunikationsschnittstelle hergestellt und aufrechterhalten werden kann.

In einer Ausführungsform kann der bidirektionale Leistungsaustausch über die Kommunikationsschnittstelle dadurch hergestellt werden, dass die Kommunikationsschnittstelle einen bidirektionalen Spannungswandler umfasst. Der bidirektionale Spannungswandler kann dabei bevorzugt einen Zwei-Quadranten-Steller, insbesondere einen Hochtiefsetzsteller, oder einen Vier-Quadranten-Steller, insbesondere einen bidirektionalen Wechselrichter umfassen. Damit kann an der Kommunikationsschnittstelle eine Spannung bereitgestellt werden, die je nach gewünschter Leistungsflussrichtung derart eingestellt wird, dass elektrische Leistung über die Kommunikationsschnittstelle aus dem Wechselrichter bzw. der Netzanschlusseinheit in die externe elektrische Einheit eingespeist oder von dem Wechselrichter bzw. der Netzanschlusseinheit aus der externe elektrische Einheit bezogen wird.

Ein erfindungsgemäßer Wechselrichter für eine Photovoltaikanlage umfasst eine zum Anschluss einer externen elektrischen Einheit eingerichtete Kommunikationsschnittstelle und ist dadurch gekennzeichnet, dass die Kommunikationsschnittstelle zum bidirektionalen Leistungsaustausch mit der externen elektrischen Einheit eingerichtet ist. Dabei kann die Kommunikationsschnittstelle bevorzugt einen USB-Anschluss umfassen, an den die externe elektrische Einheit anschließbar ist.

In einer Ausführungsform des erfindungsgemäßen Wechselrichters ist die Kommunikationsschnittstelle dazu eingerichtet, aus einer angeschlossenen externen elektrischen Einheit eine elektrische Leistung zu entnehmen, um den Wechselrichter mit dieser elektrischen Leistung zu versorgen, und eine elektrische Leistung in die angeschlossene externe elektrische Einheit einzuspeisen, wobei die externe elektrische Einheit insbesondere einen Energiespeicher, beispielsweise eine wiederaufladbare Batterie umfasst. Dazu kann die Kommunikationsschnittstelle einen bidirektionalen Spannungswandler umfassen, wobei der bidirektionale Spannungswandler bevorzugt einen Zwei-Quadranten-Steller umfasst, der insbesondere als Hochtiefsetzsteller ausgeführt sein kann. Damit kann der Wechselrichter elektrische Leistung über die Kommunikationsschnittstelle einerseits in den Energiespeicher einspeisen und andererseits aus dem Energiespeicher entnehmen, insbesondere um ohne sonstige Versorgung in Betrieb genommen zu werden.

Ein erfindungsgemäßes Verfahren zum Betrieb einer Photovoltaikanlage mit einem Photovoltaikgenerator, einem Wechselrichter und einer zum Anschluss einer externen elektrischen Einheit eingerichteten Kommunikationsschnittstelle ist dadurch gekennzeichnet, dass ein Energiespeicher an die Kommunikationsschnittstelle angeschlossen ist und elektrische Leistung bidirektional mit dem Energiespeicher über die Kommunikationsschnittstelle ausgetauscht wird. Insbesondere können im Rahmen des erfindungsgemäßen Verfahrens Komponenten der Photovoltaikanlage mit einer aus dem Energiespeicher über die Kommunikationsschnittstelle bezogenen elektrischen Leistung betrieben werden, insbesondere wenn die Photovoltaikgeneratoren nicht angeschlossen sind oder keine zum Betrieb der Komponenten ausreichende elektrische Leistung bereitstellen. Darüber hinaus kann eine elektrische Leistung in den Energiespeicher eingespeist werden, insbesondere wenn der Energiespeicher einen Energiegehalt unterhalb ihres maximalen Energiegehaltes aufweist und die Photovoltaikgeneratoren eine elektrische Leistung bereitstellen, die die zum Betrieb der Komponenten der Photovoltaikanlage benötigte elektrische Leistung übersteigt. Damit kann ein Betrieb der Photovoltaikanlage jederzeit zumindest insofern gewährleistet werden, dass Komponenten der Photovoltaikanlage, insbesondere die Wechselrichter und gegebenenfalls weitere elektrische oder elektronische Einrichtungen wie Sensoren oder Schaltelemente mit elektrischer Leistung versorgt werden, um mit diesen Komponenten bzw. Einrichtungen kommunizieren zu können, beispielsweise zum Zwecke der Parametrisierung, Inbetriebnahme oder der Software-Aktualisierung.

### KURZBESCHREIBUNG DER FIGUREN

Im Folgenden wird die Erfindung anhand in den Figuren dargestellter Ausführungsbeispiele weiter erläutert und beschrieben.
- Fig. 1: zeigt eine erste Ausführungsform einer erfindungsgemäßen Photovoltaikanlage, und
- Fig. 2: zeigt eine zweite Ausführungsform einer erfindungsgemäßen Photovoltaikanlage.

### FIGURENBESCHREIBUNG

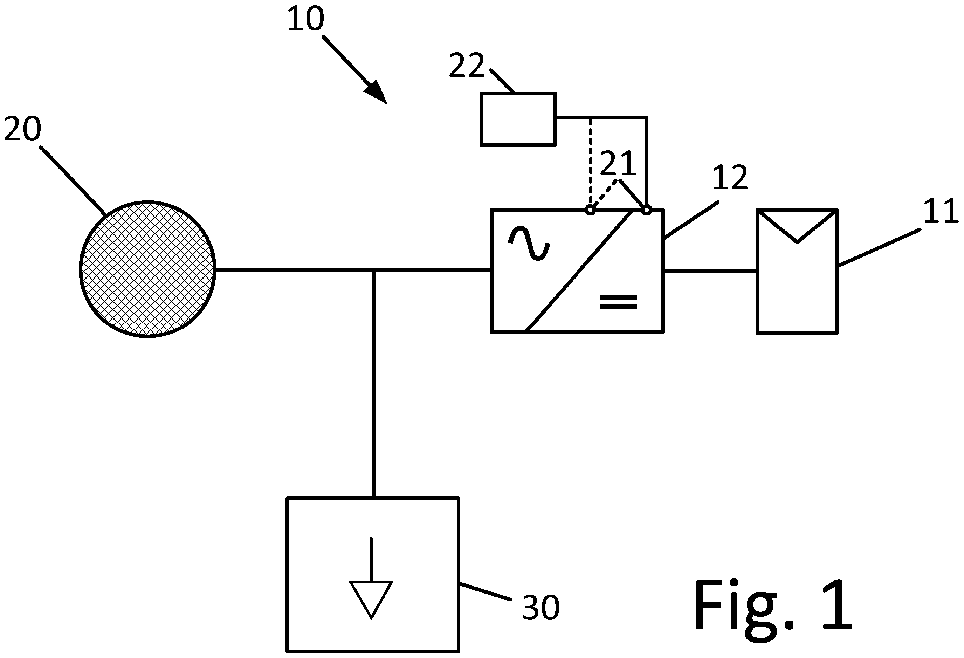

**Fig. 1** zeigt eine Photovoltaikanlage 10, die an einem Wechselspannungsnetz 20 angeschlossen ist. Die Photovoltaikanlage 10 umfasst einen Photovoltaikgenerator 11, der aus einem PV-Modul bestehen oder mehrere, parallel und/oder in Reihe geschaltete PV-Modulen umfassen kann, und der an einen Wechselrichter 12 angeschlossen ist. Der Wechselrichter 12 wandelt einen vom Photovoltaikgenerator 11 erzeugten Gleichstrom in Wechselstrom und speist den erzeugten Wechselstrom in das Wechselspannungsnetz 20 ein. An das Wechselspannungsnetz 20 kann eine Last 30 angeschlossen sein, die beispielsweise einen oder mehrere Verbraucher umfasst, wobei die Last 30 insbesondere parallel zum Wechselrichter 12 an das Wechselspannungsnetz 20 angeschlossen sein kann, so dass die Last 30 teilweise oder komplett aus dem Wechselspannungsnetz 20 bzw. von dem Wechselrichter 12 mit elektrischer Leistung versorgt werden kann.

Der Wechselrichter 12 umfasst eine Kommunikationsschnittstelle 21. An die Kommunikationsschnittstelle 21 kann eine externe elektrische Einheit 22 angeschlossen sein. Der Wechselrichter 12 kann über die Kommunikationsschnittstelle 21 sowohl Daten als auch elektrische Leistung bidirektional mit der externen elektrischen Einheit 22 austauschen.

Der Wechselrichter 12 umfasst in der Regel einen generatorseitigen Gleichspannungsteil und einen netzseitigen Wechselspannungsteil, die zumindest räumlich und ggf. auch galvanisch voneinander getrennt sind. Der Wechselrichter 12 kann derart ausgeführt sein, dass eine zum Betrieb des Wechselrichters 12 benötigte elektrische Betriebsleistung ausschließlich aus dem Gleichspannungsteil entnommen wird, wobei der Gleichspannungsteil wiederum ausschließlich vom angeschlossenen Photovoltaikgenerator 11 mit elektrischer Leistung versorgt wird. In diesem Fall befindet sich der Wechselrichter 12 nur dann in einem Betriebszustand, wenn vom Photovoltaikgenerator 11 ausreichend elektrische PV-Leistung erzeugt und dem Gleichspannungsteil des Wechselrichters 12 zur Verfügung gestellt wird.

Der Wechselrichter 12 der erfindungsgemäßen Photovoltaikanlage 10 kann von der externen elektrischen Einheit 22 über die Kommunikationsschnittstelle 21 mit der zum Betrieb des Wechselrichters 12 benötigten elektrischen Betriebsleistung versorgt werden. Dazu kann die externe elektrische Einheit 22 ein Netzteil umfassen, das von dem Wechselspannungsnetz 20 gespeist wird. Bevorzugt umfasst die externe elektrische Einheit 22 einen Energiespeicher, aus dem die Betriebsleistung des Wechselrichters 12 entnommen werden kann. Besonders bevorzugt kann der Energiespeicher der externen elektrischen Einheit 22 über die Kommunikationsschnittstelle vom Wechselrichter geladen werden, insbesondere wenn die zur Verfügung stehende PV-Leistung die Betriebsleistung des Wechselrichters 12 (deutlich) übersteigt.

Der Wechselrichter 12 bezieht seine Betriebsleistung im Normalbetrieb aus dem Photovoltaikgenerator 11 und speist die über die Betriebsleistung hinaus gehende PV-Leistung abzüglich etwaiger Schalt- und Filterverluste in das Wechselspannungsnetz 20 ein. Ein Teil der PV-Leistung kann zum Laden bzw. zum Aufrechterhalten der Ladung des Energiespeichers in der externen elektrischen Einheit 22 verwendet werden. Dazu kann die Kommunikationsschnittstelle 21 einen bidirektionalen Spannungswandler, beispielsweise einen Hochtiefsetzsteller oder einem Zwei-Quadranten-Steller umfassen, der einen Leistungsfluss zwischen dem Wechselrichter 12 und der externen elektrischen Einheit 22 steuert, insbesondere durch geeignetes Einstellen seiner relativen Ein- und Ausgangsspannungen.

Wenn die PV-Leistung nicht zum Betrieb des Wechselrichters 12 ausreicht, beispielsweise nachts oder im Falle eines Defektes des Photovoltaikgenerators 11 oder einzelner Teile davon oder nach einem fehlerbedingten Abschalten des Wechselrichters 12, kann der Wechselrichter 12 in Betrieb genommen werden, indem die Betriebsleistung des Wechselrichters 12 über die Kommunikationsschnittstelle 21 aus der externen elektrischen Einheit 22 entnommen wird. Dadurch wird ermöglicht, dass der Wechselrichter 12 auch ohne oder bei zu geringer PV-Leistung in Betrieb genommen werden kann. Dies ist insbesondere sinnvoll, um eine Kommunikation mit dem Wechselrichter 12 zu ermöglichen, beispielsweise um Daten aus dem Wechselrichter 12 auszulesen oder in den Wechselrichter 12 einzuspielen.

Die Kommunikationsschnittstelle 21 kann am Gleichspannungsteil des Wechselrichters 12 und zusätzlich oder alternativ am Wechselspannungsteil des Wechselrichters 12 angeordnet sein; diese Anordnung ist in Fig. 1 gestrichelt dargestellt. Eine Anordnung der Kommunikationsschnittstelle 21 am Gleichspannungsteil des Wechselrichters 12 ermöglicht einen Betrieb des Wechselrichters 12 bei keiner oder zu geringer PV-Leistung, falls der Wechselrichter 12 seine Betriebsleistung aus dem angeschlossenen Photovoltaikgenerator 11 bezieht. Eine Anordnung der Kommunikationsschnittstelle 21 am Wechselspannungsteil des Wechselrichters 12 ermöglicht einen Betrieb des Wechselrichters 12 bei einer Unterbrechung der Verbindung zum Wechselspannungsnetz 20 oder einem sonstigen Fehler im Wechselspannungsnetz 20, falls der Wechselrichter 12 seine Betriebsleistung aus dem Wechselspannungsnetz 20 bezieht.

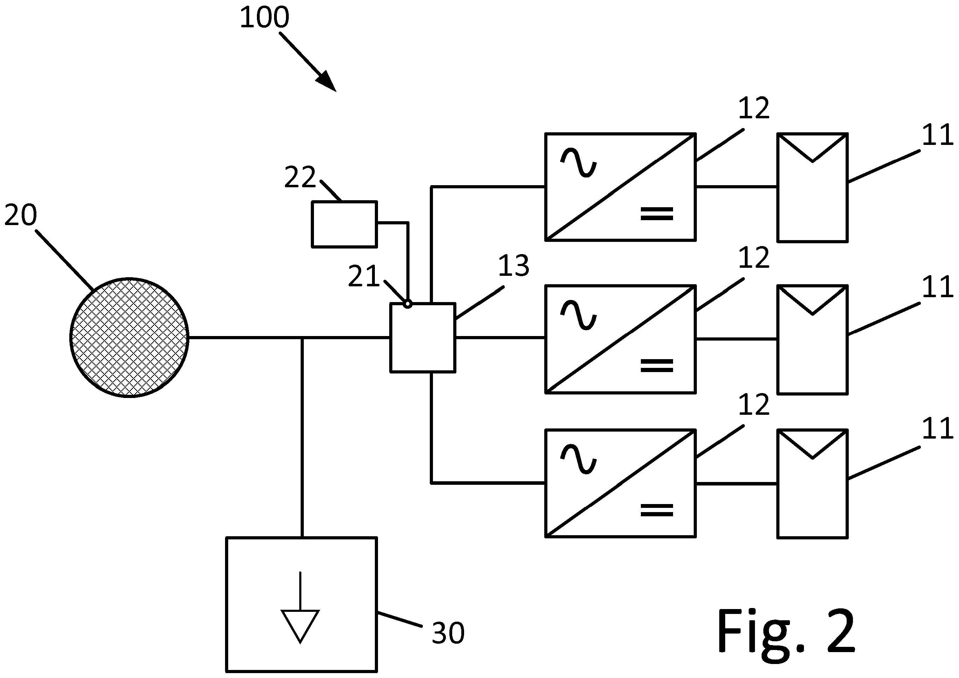

**Fig. 2** zeigt eine weitere Ausführungsform einer erfindungsgemäßen Photovoltaikanlage 100, bei der mehrere Photovoltaikgeneratoren 11 jeweils individuell an mehrere Wechselrichter 12 angeschlossen sind. Die Photovoltaikgeneratoren 11 können wiederum aus einem PV-Modul bestehen oder mehrere, parallel und/oder in Reihe geschaltete PV-Module umfassen. Die Wechselrichter 12 wandeln den vom jeweils angeschlossenen Photovoltaikgenerator 11 erzeugten Gleichstrom in Wechselstrom und speisen den erzeugten Wechselstrom in das Wechselspannungsnetz 20 ein. Dabei sind die Wechselrichter 12 jeweils an eine Netzanschlusseinheit 13 angeschlossen, wobei die Netzanschlusseinheit 13 insbesondere dazu ausgebildet sein kann, verschiedene Monitoring- und Schutzfunktionen wie Netzüberwachung, Überlast- oder Überspannungsabsicherung und/oder Potentialverschiebungen auszuführen. Darüber hinaus kann die Netzanschlusseinheit 13 zur Kommunikation mit den Wechselrichtern 12 und zu deren Steuerung eingerichtet sein, so dass beispielsweise das elektrische Verhalten der Wechselrichter hinsichtlich Blindleistung, Regelleistung und/oder sonstiger elektrischer Parameter über die Netzanschlusseinheit 13 gesteuert werden kann. Dazu kann die Netzanschlusseinheit 13 insbesondere zusätzlich oder alternativ zur Kommunikation mit externen Kommunikationspartnern eingerichtet sein, beispielsweise mit Messstellen, Heimautomationssystemen oder Netzleitwarten. Zur Kommunikation zwischen der Netzanschlusseinheit 13 und den Wechselrichtern 12 sind verschiedene bekannte Verfahren geeignet, beispielsweise über die Wechselspannungsleitungen zwischen den Wechselrichtern 12 und der Netzanschlusseinheit 13 (sogenannte Powerline-Kommunikation) oder über separate Kommunikationsleitungen oder per Funk.

Die Netzanschlusseinheit 13 weist eine Kommunikationsschnittstelle 21 auf, an die eine externe elektrische Einheit 22 anschließbar ist. Die Netzanschlusseinheit 13 kann über die Kommunikationsschnittstelle 21 sowohl Daten als auch elektrische Leistung bidirektional mit einer angeschlossenen externen elektrischen Einheit 22 austauschen. Insbesondere kann die externe elektrische Einheit 22 einen elektrischen Energiespeicher umfassen, der von der Netzanschlusseinheit 13 über die Kommunikationsschnittstelle 21 geladen und entladen werden kann. Dazu kann die Netzanschlusseinheit 13 einen bidirektionalen Spannungswandler, insbesondere einen Vier-Quadranten-Steller umfassen, der einen Leistungsfluss zwischen der Netzanschlusseinheit 13 und der externen elektrischen Einheit 22 steuert. Dazu kann ein solcher Vier-Quadranten-Steller eine in der Netzanschlusseinheit 13 abgegriffene Wechselspannung in eine Gleichspannung umsetzen, die für ein Laden des Energiespeichers in der externen elektrischen Einheit 22 verwendet werden kann. Umgekehrt kann der Vier-Quadranten-Steller eine von einem Energiespeicher in der externen elektrischen Einheit 22 abgegriffene Gleichspannung in eine Wechselspannung wandeln, die innerhalb der Netzanschlusseinheit 21 auf Wechselspannungsleitungen aufgeprägt werden kann, um einen Wechselstrom in den Wechselspannungsleitungen zu erzeugen. Es versteht sich, dass ein solcher wechselrichtender Betrieb des Vier-Quadranten-Stellers in der Netzanschlusseinheit 12 wesentlich kleinere Leistungen umfasst als die maximale Leistung des aus den Photovoltaikgeneratoren 11 durch die Wechselrichter 12 erzeugten Wechselstroms der Photovoltaikanlage 100, und dass der Vier-Quadranten-Steller entsprechend wesentlich kleiner als die Wechselrichter 12 ausgelegt sein kann.

Im Falle eines Ausfalls des Wechselspannungsnetzes 20 kann es zu einer automatischen Abschaltung der Wechselrichter 12 kommen. Insbesondere kann ein bewusstes Trennen der Photovoltaikanlage 100 vom Wechselspannungsnetz 20, beispielsweise aus Wartungsgründen oder im Gefahrenfalle durch eine Feuerwehr, zu einer normativ geforderten Freischaltung der Photovoltaikanlage 100 führen, wobei die komplette Photovoltaikanlage 100 spannungsfrei sein soll. Dazu können hier nicht dargestellte Schaltelemente zwischen Wechselspannungsnetz 20 und den Wechselrichtern 12 und/oder zwischen den Wechselrichtern 12 und den jeweiligen Photovoltaikgeneratoren 11 betätigt werden, so dass die Wechselrichter 12 ihre Betriebsleistung nicht mehr gleichspannungs- bzw. wechselspannungsseitig beziehen können. In der Folge steht regelmäßig auch der Netzanschlusseinheit 13 keine elektrische Leistung zur Verfügung. Darüber hinaus entfällt bei einem Wegfall der Wechselspannung an den wechselspannungsseitigen Anschlüssen der netzgeführten Wechselrichter 12 das zur Einspeisung notwendige Netzführungssignal.

In einer erfindungsgemäßen Photovoltaikanlage 100 kann unter den beschriebenen Umständen eine elektrische Leistung über die Kommunikationsschnittstelle 21 aus der externen elektrischen Einheit 22 entnommen und dazu verwendet werden, mittels eines Spannungswandlers, insbesondere mittels eines Vier-Quadranten-Stellers eine Gleichspannung und/oder eine Wechselspannung an die Wechselstromleitungen zwischen der Netzanschlusseinheit 13 und den Wechselrichtern 12 anzulegen. Mittels einer entsprechenden Gleichspannung oder Wechselspannung kann eine elektrische Leistung an die Wechselrichter 12 übertragen werden, die zum Betrieb des Wechselrichters 12 genutzt werden kann. Dies ist insbesondere sinnvoll, um eine Kommunikation mit dem Wechselrichter 12 zu ermöglichen, beispielsweise um Daten aus den Wechselrichtern 12 auszulesen oder in die Wechselrichter 12 einzuspielen sowie insbesondere um einen (Wieder-)Aufstartvorgang der Photovoltaikanlage 100 zu ermöglichen bzw. zu initiieren. Eine entsprechende Wechselspannung kann als Netzführungssignal für die netzgeführten Wechselrichter 12 verwendet werden und/oder eine Übertragung einer Betriebsleistung aus der externen elektrischen Einheit 21 an die Wechselrichter 12 bewirken.

Eine erfindungsgemäße Photovoltaikanlage 10 bzw. 100 kann insbesondere in den folgenden Konstellationen besonders vorteilhaft verwendet werden.

An die Kommunikationsschnittstelle 21 kann ein externes Netzteil angeschlossen werden, das dem Wechselrichter 12 gemäß Fig. 1 bzw. der Netzanschlusseinheit 21 gemäß Fig. 2 eine elektrische Leistung zur Verfügung stellt. Diese elektrische Leistung kann dazu genutzt werden, den bzw. die Wechselrichter 12 in einen Betriebszustand zu versetzen, der zumindest eine Kommunikation mit einer Steuereinheit im Wechselrichter 12 ermöglicht. Wenn die Kommunikationsschnittstelle 21 einen USB-Anschluss umfasst, kann auf diesem Wege mittels eines handelsüblichen Ladegerätes, eines Steckernetzteils oder eines USB-Ausgangs eines tragbaren Computers beispielsweise eine neu installierte Photovoltaikanlage 10, 100 programmiert, konfiguriert, initialisiert und/oder in Betrieb genommen werden, bevor die Photovoltaikanlage 10, 100 an das Wechselspannungsnetz 20 angeschlossen wurde und/oder bevor ein Photovoltaikgenerator 11 mit einem der Wechselrichter 12 verbunden wurde.

Die Kommunikationsschnittstelle 21 kann alternativ oder zusätzlich zur Ausgabe elektrischer Leistung verwendet werden. Dabei stellt der Wechselrichter 12 in der Ausführungsform gemäß Fig. 1 bzw. ein bidirektionaler Spannungswandler in der Netzanschlusseinheit 13 eine maximale elektrische Leistung zur Verfügung, die je nach Ausführung der Kommunikationsschnittstelle 21 zwischen 0,5 Watt und 100 Watt beträgt. Insbesondere wenn die Kommunikationsschnittstelle 21 einen USB-Anschluss umfasst, der nach der Spezifizierung USB-PD (USB Power Delivery) ausgeführt ist, können bis zu 100 Watt über die Kommunikationsschnittstelle 21 an eine externe elektrische Einheit 22 übertragen werden; dies ist ausreichend zur Versorgung externer Kleingeräte und zum Laden eines kleinen bis mittleren Energiespeichers mit einer Kapazität bis etwa 1000 Wattstunden. Ein derartiger Energiespeicher kann bei Nichtgebrauch in der Photovoltaikanlage 10, 100 entnommen und anderweitig verwendet werden, beispielsweise um tragbare Telefone oder ähnliche Geräte über deren USB-Anschlüsse mit Betriebsleistung zu versorgen und ggf. in diesen Geräten umfasste Energiespeicher zu laden.

Wenn an die Kommunikationsschnittstelle 21 eine externe elektrische Einheit 22 mit einem Energiespeicher angeschlossen ist, kann ohne Eingriff von außen zwischen den beiden oben genannten Konstellationen gewechselt werden. Im Normalbetrieb der Photovoltaikanlage 10, 100 wird der Energiespeicher geladen oder seine Ladung erhalten. Nachts und/oder im Falle eines Ausfalls des Wechselspannungsnetzes 20 kann derselbe Energiespeicher dem Wechselrichter 12 über die Kommunikationsschnittstelle 21 direkt bzw. über die Netzanschlusseinheit 13 indirekt eine elektrische Betriebsleistung in Form eines Gleich- oder Wechselstroms sowie ggf. ein Netzführungssignal in Form einer Wechselspannung zur Verfügung stellen.

Die externe elektrische Einheit 22 kann alternativ oder zusätzlich einen Datenspeicher umfassen, dessen Inhalt über die Kommunikationsschnittstelle 21 zumindest teilweise an den bzw. die Wechselrichter 12 übertragen werden kann. Dieser übertragene Inhalt kann insbesondere Firmware zum Betrieb der Wechselrichter 12 und/oder sonstige Parameter wie nominelle Eigenschaften des Wechselspannungsnetzes 20, Grenzwerte für Netzspannung und Netzfrequenz, Vorgabewerte für die Einspeisung elektrischer Leistung in das Wechselspannungsnetz 20, Kommunikationsparameter und ähnliches umfassen. Im Gegenzug können Daten von dem Wechselrichter 12 bzw. von den Wechselrichtern 12 in dem Datenspeicher der externen elektrischen Einheit 22 abgelegt werden, beispielsweise Leistungs- und Energiewerte der Photovoltaikanlage, Fehlermeldungen und ähnliches.

### Bezugszeichenliste

- 10, 100: Photovoltaikanlage
- 11: Photovoltaikgenerator
- 12: Wechselrichter
- 13: Netzanschlusseinheit
- 20: Wechselspannungsnetz
- 21: Kommunikationsschnittstelle
- 22: Externe elektrische Einheit
- 30: Last

## Patentansprüche

1. Photovoltaikanlage (10, 100) mit einem Photovoltaikgenerator (11), einem Wechselrichter (12) und einer zum Anschluss einer externen elektrischen Einheit (22) eingerichteten Kommunikationsschnittstelle (21), **dadurch gekennzeichnet, dass** die Kommunikationsschnittstelle (21) zum bidirektionalen Austausch von Daten und elektrischer Leistung mit der externen elektrischen Einheit (22) eingerichtet ist.

2. Photovoltaikanlage (10, 100) nach Anspruch 1, **dadurch gekennzeichnet, dass** die Kommunikationsschnittstelle (21) einen USB-Anschluss umfasst.

3. Photovoltaikanlage (10, 100) nach Anspruch 1 oder 2, **dadurch gekennzeichnet, dass** die Kommunikationsschnittstelle (21) in dem Wechselrichter (12) oder in einer Netzanschlusseinheit (13) der Photovoltaikanlage (10, 100) angeordnet ist.

4. Photovoltaikanlage (10, 100) nach einem der Ansprüche 1 bis 3, **dadurch gekennzeichnet, dass** die Kommunikationsschnittstelle (21) dazu eingerichtet ist, aus der angeschlossenen externen elektrischen Einheit (22) eine elektrische Leistung zu entnehmen, um Komponenten der Photovoltaikanlage (10, 100) mit dieser elektrischen Leistung zu versorgen.

5. Photovoltaikanlage (10, 100) nach Anspruch 5, **dadurch gekennzeichnet, dass** die Kommunikationsschnittstelle (21) dazu eingerichtet ist, eine elektrische Leistung in die externe elektrische Einheit (22) einzuspeisen, wobei die externe elektrische Einheit (22) einen Energiespeicher, insbesondere eine wiederaufladbare Batterie umfasst.

6. Photovoltaikanlage (10, 100) nach einem der voranstehenden Ansprüche, **dadurch gekennzeichnet, dass** die Kommunikationsschnittstelle (21) einen bidirektionalen Spannungswandler umfasst, wobei der bidirektionale Spannungswandler bevorzugt einen Zwei-Quadranten-Steller, insbesondere einen Hochtiefsetzsteller, oder einen Vier-Quadranten-Steller, insbesondere einen bidirektionalen Wechselrichter, umfasst.

7. Wechselrichter (12) für eine Photovoltaikanlage (10, 100), wobei der Wechselrichter (12) eine zum Anschluss einer externen elektrischen Einheit (22) eingerichtete Kommunikationsschnittstelle (21) umfasst, **dadurch gekennzeichnet, dass** die Kommunikationsschnittstelle (21) zum bidirektionalen Austausch von Daten und elektrischer Leistung mit der externen elektrischen Einheit (22) eingerichtet ist, wobei die Kommunikationsschnittstelle (21) bevorzugt einen USB-Anschluss umfasst.

8. Wechselrichter (12) nach Anspruch 7, **dadurch gekennzeichnet, dass** die Kommunikationsschnittstelle (21) dazu eingerichtet ist, aus der angeschlossenen externen elektrischen Einheit (22) eine elektrische Leistung zu entnehmen, um den Wechselrichter (12) mit dieser elektrischen Leistung zu versorgen, und eine elektrische Leistung in die externe elektrische Einheit (22) einzuspeisen, wobei die externe elektrische Einheit (22) insbesondere einen Energiespeicher, insbesondere eine wiederaufladbare Batterie umfasst.

9. Wechselrichter (12) nach Anspruch 8, **dadurch gekennzeichnet, dass** die Kommunikationsschnittstelle (21) einen bidirektionalen Spannungswandler umfasst, wobei der bidirektionale Spannungswandler bevorzugt einen Zwei-Quadranten-Steller umfasst, der insbesondere als Hochtiefsetzsteller ausgeführt ist.

10. Verfahren zum Betrieb einer Photovoltaikanlage (10, 100) mit einem Photovoltaikgenerator (11), einem Wechselrichter (12) und einer zum Anschluss einer externen elektrischen Einheit (22) eingerichteten Kommunikationsschnittstelle (21),
**dadurch gekennzeichnet, dass**
die an die Kommunikationsschnittstelle (21) angeschlossene externe elektrische Einheit (22) einen Energiespeicher umfasst, und dass über die Kommunikationsschnittstelle (21) Daten und elektrische Leistung bidirektional mit dem Energiespeicher ausgetauscht wird.

11. Verfahren nach Anspruch 10, **dadurch gekennzeichnet, dass** Komponenten der Photovoltaikanlage (10, 100) mit einer aus dem Energiespeicher über die Kommunikationsschnittstelle (21) bezogenen elektrischen Leistung betrieben werden, insbesondere wenn kein Photovoltaikgenerator (11) angeschlossen ist oder der Photovoltaikgenerator (11) keine zum Betrieb der Komponenten ausreichende elektrische Leistung bereitstellt.

12. Verfahren nach Anspruch 10 oder 11, **dadurch gekennzeichnet, dass** eine elektrische Leistung in den Energiespeicher eingespeist wird, insbesondere wenn der Energiespeicher einen Energiegehalt unterhalb ihres maximalen Energiegehaltes aufweist und der Photovoltaikgenerator (11) eine elektrische Leistung bereitstellen, die die zum Betrieb der Komponenten der Photovoltaikanlage benötigte elektrische Leistung übersteigt.

## Claims

1. A photovoltaic system (10, 100) with a photovoltaic generator (11), an inverter (12) and a communication interface (21) configured to connect an external electrical unit (22), **characterized in that** the communication interface (21) is configured for bidirectional exchange of data and electrical power with the external electrical unit (22).

2. The photovoltaic system (10, 100) according to claim 1, **characterised in that** the communication interface (21) comprises a USB port.

3. The photovoltaic system (10, 100) according to claim 1 or 2, **characterised in that** the communication interface (21) is arranged in the inverter (12) or in a grid connection unit (13) of the photovoltaic system (10, 100).

4. The photovoltaic system (10, 100) according to one of claims 1 to 3, **characterised in that** the communication interface (21) is configured to draw electrical power from the connected external electrical unit (22) to supply components of the photovoltaic system (10, 100) with this electrical power.

5. The photovoltaic system (10, 100) according to claim 5, **characterised in that** the communication interface (21) is configured to feed an electrical power into the external electrical unit (22), wherein the external electrical unit (22) comprises an energy storage, in particular a rechargeable battery.

6. The photovoltaic system (10, 100) according to one of the preceding claims, **characterised in that** the communication interface (21) comprises a bidirectional voltage converter, wherein the bidirectional voltage converter preferably comprises a two-quadrant converter, in particular a high-low converter, or a four-quadrant converter, in particular a bidirectional inverter.

7. An inverter (12) for a photovoltaic system (10, 100), the inverter (12) comprising a communication interface (21) configured to connect an external electrical unit (22), **characterised in that** the communication interface (21) is configured for bidirectional exchange of data and electrical power with the external electrical unit (22), the communication interface (21) preferably comprising a USB port.

8. The inverter (12) according to claim 7, **characterised in that** the communication interface (21) is configured to draw electrical power from the connected external electrical unit (22) to supply the inverter (12) with this electrical power, and to feed electrical power into the external electrical unit (22), the external electrical unit (22) preferably comprising an energy store, in particular a rechargeable battery.

9. The inverter (12) according to claim 8, **characterized in that** the communication interface (21) comprises a bidirectional voltage converter, wherein the bidirectional voltage converter preferably comprises a two-quadrant converter, in particular designed as a buck-boost converter.

10. A method for operating a photovoltaic system (10, 100) with a photovoltaic generator (11), an inverter (12) and a communication interface (21) configured to connect an external electrical unit (22),
**characterised in that**
the external electrical unit (22) connected to the communication interface (21) comprises an energy storage device, and **in that** data and electrical power are exchanged bidirectionally with the energy storage device via the communication interface (21).

11. The method according to claim 10, **characterised in that** components of the photovoltaic system (10, 100) are operated with electrical power obtained from the energy storage device via the communication interface (21), in particular if no photovoltaic generator (11) is connected or the photovoltaic generator (11) does not provide sufficient electrical power to operate said components.

12. The method according to claim 10 or 11, **characterised in that** an electrical power is fed into the energy storage, in particular if the energy storage has an energy content below its maximum energy content, and the photovoltaic generator (11) provides an electrical power which exceeds the electrical power required to operate the components of the photovoltaic system.

## Revendications

1. Une installation photovoltaïque (10, 100) avec un générateur photovoltaïque (11), un onduleur (12) et une interface de communication (21) configurée pour le raccordement à une unité électrique externe (22), **caractérisée par le fait que** l'interface de communication (21) est configurée pour l'échange bidirectionnel de données et de puissance électrique avec l'unité électrique externe (22).

2. Une installation photovoltaïque (10, 100) conforme à la revendication 1, **caractérisée par le fait que** l'interface de communication (21) comprend un raccordement USB.

3. Une installation photovoltaïque (10, 100) conforme à la revendication 1 ou 2, **caractérisée par le fait que** l'interface de communication (21) est intégrée dans l'onduleur (12) ou dans une unité de raccordement au réseau (13) de l'installation photovoltaïque (10, 100).

4. Une installation photovoltaïque (10, 100) conforme à l'une des revendications 1 à 3, **caractérisée par le fait que** l'interface de communication (21) est configurée pour extraire de la puissance électrique de l'unité électrique externe (22) raccordée afin d'alimenter les composants de l'installation photovoltaïque (10, 100) avec cette puissance électrique.

5. Une installation photovoltaïque (10, 100) conforme à la revendication 5, **caractérisée par le fait que** l'interface de communication (21) est configurée pour injecter de la puissance électrique dans l'unité électrique externe (22), cette unité électrique externe (22) comprenant un système de stockage d'énergie et notamment une batterie rechargeable.

6. Une installation photovoltaïque (10, 100) conforme à l'une des revendications précédentes, **caractérisée par le fait que** l'interface de communication (21) comprend un transformateur de tension bidirectionnel, ce transformateur de tension bidirectionnel comprenant idéalement un convertisseur à deux quadrants, notamment un convertisseur élévateur et abaisseur, ou un convertisseur à quatre quadrants, notamment un onduleur bidirectionnel.

7. Un onduleur (12) pour une installation photovoltaïque (10, 100), l'onduleur (12) comprenant une interface de communication (21) configurée pour le raccordement à une unité électrique externe (22), **caractérisé par le fait que** l'interface de communication (21) est configurée pour l'échange bidirectionnel de données et de puissance électrique avec l'unité électrique externe (22), l'interface de communication (21) comprenant idéalement un raccordement USB.

8. Un onduleur (12) conforme à la revendication 7, **caractérisé par le fait que** l'interface de communication (21) est configurée pour extraire de la puissance électrique de l'unité électrique externe (22) raccordée afin d'alimenter l'onduleur (12) avec cette puissance électrique et pour injecter de la puissance électrique dans l'unité électrique externe (22), cette unité électrique externe (22) comprenant un système de stockage d'énergie, notamment une batterie rechargeable.

9. Un onduleur (12) conforme à la revendication 8, **caractérisé par le fait que** l'interface de communication (21) comprend un transformateur de tension bidirectionnel, ce transformateur de tension bidirectionnel comprenant idéalement un convertisseur à deux quadrants notamment configuré comme convertisseur élévateur et abaisseur.

10. Procédure d'exploitation d'une installation photovoltaïque (10, 100) avec un générateur photovoltaïque (11), un onduleur (12) et une interface de communication (21) configurée pour le raccordement à une unité électrique externe (22), **caractérisée par le fait que** l'unité électrique externe (22) raccordée à l'interface de communication (21) comprend un système de stockage d'énergie et que des données ainsi que de la puissance électrique sont échangées de manière bidirectionnelle avec le système de stockage d'énergie par le biais de l'interface de communication (21).

11. Procédure conforme à la revendication 10, **caractérisée par le fait que** les composants de l'installation photovoltaïque (10, 100) sont exploités avec une puissance électrique extraite du système de stockage d'énergie par le biais de l'interface de communication (21), notamment lorsqu'aucun générateur photovoltaïque (11) n'est raccordé ou si le générateur photovoltaïque (11) ne dispose pas de la puissance électrique nécessaire pour exploiter les composants.

12. Procédure conforme à la revendication 10 ou 11, **caractérisée par le fait que** de la puissance électrique est injectée dans le système de stockage d'énergie, notamment lorsque ce système de stockage d'énergie présente un niveau d'énergie inférieur à son niveau d'énergie maximal et que le générateur photovoltaïque (11) dispose d'une puissance électrique supérieure à la puissance électrique nécessaire pour exploiter les composants de l'installation photovoltaïque.
